(19) **Europäisches Patentamt**

**European Patent Office**

**Office européen des brevets**

(11) **EP 0 700 189 B1**

(12) **EUROPEAN PATENT SPECIFICATION**

(45) Date of publication and mention
of the grant of the patent:
**14.02.2001 Bulletin 2001/07**

(51) Int Cl.[7]: **H04L 25/03**, H04L 5/06,
H04L 27/26

(21) Application number: **95111569.0**

(22) Date of filing: **22.07.1995**

(54) **Method and channel equalizer for the channel equalization of digital signals in the frequency domain**

Verfahren und Vorrichtung für die Entzerrung von digitalen Signalen im Frequenzbereich

Procédé et dispositif pour l'égalisation de signaux numériques dans le domaine de fréquences

(84) Designated Contracting States:
**DE FR GB IT**

(30) Priority: **03.08.1994 FI 943613**

(43) Date of publication of application:
**06.03.1996 Bulletin 1996/10**

(73) Proprietor: **NOKIA TECHNOLOGY GmbH**
**75175 Pforzheim (DE)**

(72) Inventor: **Rinne, Jukka**
**FIN-33330 Tampere (FI)**

(74) Representative: **Stendel, Klaus et al**
**Nokia GmbH,**
**Patentabteilung,**
**Postfach 101823**
**44718 Bochum (DE)**

(56) References cited:
**FR-A- 2 698 504**

• **ICASSP 80 PROCEEDINGS. IEEE INTERNATIONAL CONFERENCE ON ACOUSTICS, SPEECH AND SIGNAL PROCESSING, DENVER, CO, USA, 9-11 APRIL 1980, NEW YORK, NY, USA, pages 964-967, PELED A. ET AL.: 'Frequency domain data transmission using reduced computational complexity algorithms'**
• **1994 IEEE GLOBECOM, SAN FRANCISCO, CA, USA, 28 NOV.-2 DEC. 1994, vol. 1, ISBN 0-7803-1820-X, 1994, NEW YORK, NY, USA, IEEE, USA, pages 415-419, RINNE J. ET AL.: 'Equalization of orthogonal frequency division multiplexing signals'**

**Description**

The invention relates to a method and a channel equalizer implemented in a receiver for the channel equalization of digital radio and television signals in the frequency domain.

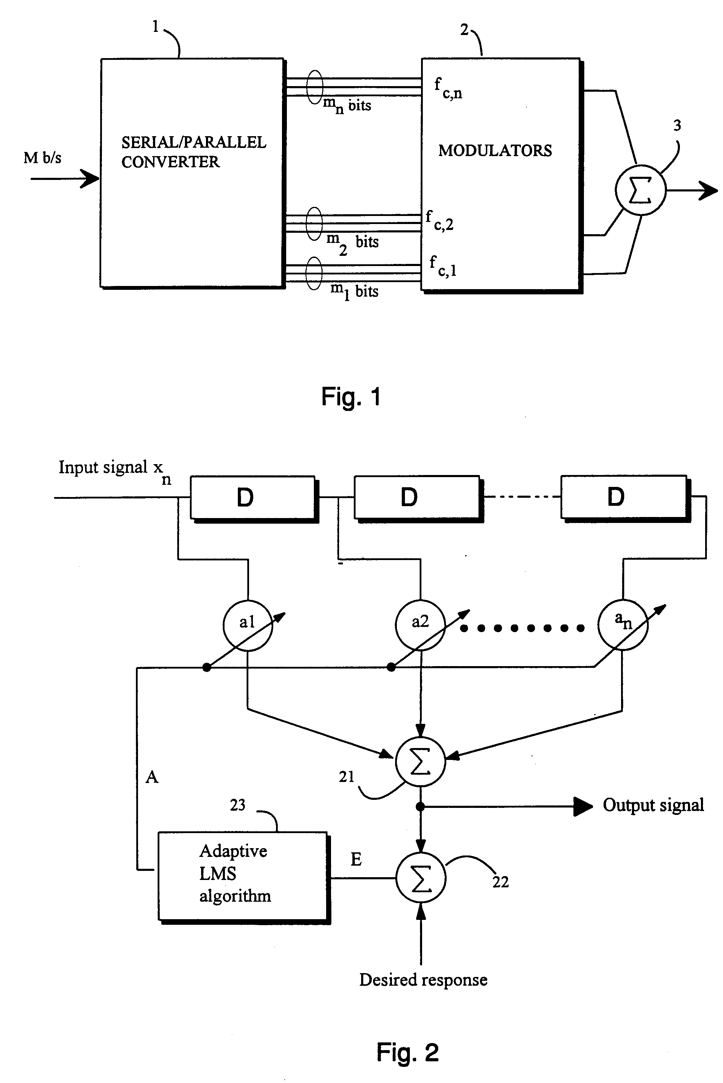

A prior known method for transferring data by radio waves is to divide it into several interleaved bit streams and to modulate by each substream its own carrier. The modulation technique can be termed as orthogonally multiplexed Quadrature Amplitude Modulation (QAM) or more generally also as Multicarrier Modulation (MCM) or as Orthogonally Frequency-Division Multiplexing (OFDM). The basic principle of the method is shown in Fig. 1. Input data stream M b/s is grouped into blocks in a serial/parallel converter 1 to obtain parallel bit streams m1, m2...mn. Each bit stream modulates its own carrier fc1, fc2,..fcn in a modulator block 2 after which the received modulated carriers are summed in a summer 3 and transmitted into a transfer channel. The modulation of subcarriers can be of any type in principle, for example, QAM, PSK (Phase-Shift Keying) and so on.

In the receiver, the signal received from the channel must be separated again into carriers before demodulation can take place. There are several methods in the separation. First, it can be implemented by filters with sharp edges. Second, the modulation itself can be implemented in a preferable manner concerning separation. Staggered Quadrature Amplitude Modulation (SQAM) can be used, in which the edges of the spectra of the sub-bands overlap on top of the edges of the spectrum of the neighboring band at which orthogonality of the sub-bands resulting in the possibility for separation in the receiver being achieved by offsetting suitably the data of the sub-bands in a modulator. Then the overlapping edges of the spectra of adjacent sub-bands are in opposite phases and separation by use of simple filtering is possible. The third method is modulation by using Quadrature Amplitude Shift Keying (QASK) when, instead of filtering, separation can be implemented by using baseband processing.

Multicarrier QASK modulation is equivalent to Inverse Fast Fourier Transform (IFFT) and to Inverse Discrete Fourier Transform (IDFT) when the fundamental baseband pulse shape is a rectangle. Then, as modulation is performed a symbol or a block at a time, demodulation can be performed without separation to channels by performing a Fourier transform respectively to discrete blocks or symbols. The results of the transform can be demultiplexed directly as sub-channels.

Whichever method is used, the transfer channel always causes interference. It causes attenuation and delay so that each subcarrier is received with a different amplitude and/or phase. The shape of the pulse is distorted and it may overlap with the preceding and the following pulse. This will result in Inter Carrier Interference or Inter Symbol Interference or the combination of the two such that the orthogonality of the baseband pulses of the sub-bands is lost. Usually the length of the symbol is limited so that it does not exceed the maximum delay of the transfer channel.

For this reason, the effect of the transfer channel must be corrected in a receiver by a channel equalizer which is used for adapting the receiver into the impulse response of the transfer channel. There are at least three ways available for this: 1) To fully equalize the channel with a conventional adaptive tapped delay line. This has the disadvantage that the amount of computation required for it is excessive when one takes into consideration the capacity and the bit rate of the digital signal processor (DSP). 2) To hold the length of the baseband symbol greater than the distance T in time between the pulses of the channels and to perform the integration of the Fourier transform only for the time T. 3) To use a combination of the previous methods, that is a short equalizer and the same prefix for the sequence of samples.

Prior known general solutions in the channel equalization are based on the use of linear equalizers. These equalizers are adaptive which means that their factors are adjusted before receiving data transmission, in other words, training of an equalizer is performed. In the training of an equalizer, a data sequence which has been determined immediately at the beginning of the connection is transmitted. It is a bit string known by the receiver. By comparing the received bit string to the real bit string stored in the memory, suitable correction factors can be calculated from the impulse response to the FIR (Finite-Impulse Response) filter of the equalizer. Also during the actual receiving, the factors can be slightly adjusted to correspond to slow, small changes in the channel. Training of an equalizer and subsequent adjustment of correction factors are e.g. described in ICASSP 80, Proceedings of the IEEE International Conference on Acoustics, Speech and Signal Processing, Denver, CO, USA, 9-11 April 1980, New York, NY, USA, pages 964-967, Peled A. Et al.: 'Frequency domain data transmission using reduced computational complexity algorithms'. In this document training is called "initialization" and adjustment of correction factors is called "equalizer update". The equalization described in this document concentrates on the impulse response coefficients during the initialization procedure and second order channel effects such as: phase jitter, amplitude modulation jitter and also differences in clock rates between receiver and transmitter in the equalizer update procedure. Correction factors used in linear equalizers can be adjusted, for example, by using the principle of the Least Mean Square (LMS) or the Least Mean Squared Error (LMSE), or by the method of Zero Forcing (ZF). The former method strives to minimize the mean squared error and the latter strives to adjust the mutual influence of the received symbols as zero at given points.

The basic principle of the LMS adaptive filter used in the time domain equalizer is shown in Fig. 2. The input sample string is transmitted to sequential delay elements D and from their output, the input signal vector is obtained.

Its samples x1, x2, ..,xn are each separately weighted by weighting values a1, a2, ..,an after which the weighted sample values are summed in a summer 21. Thereafter, the difference signal E of the received sum vector yn and the desired vector dn which corresponds to the original transmitted vector and which is obtained from the memory, is calculated by using a second summer 22. In a calculation block 23 using LMS adaptive algorithm, the mean of the squares of the differences is minimized by updating the weighting factors a1, a2, ..,an of the weight vector A whenever a new vector xn is received.

Linear equalizers are used mainly as time domain equalizers but their weakness under certain conditions is the slow convergence rate of calculation. One way to accelerate the convergence rate is to somehow transform the input signal x into another signal with the corresponding autocorrelation matrix having a smaller ratio of maximum eigenvalue/minimum eigenvalue. One way of transformation is to transform the time domain signal into the frequency domain where equalizers minimizing the mean squared error have already been presented. A signal received in the frequency domain equalizers is transformed into the frequency domain, for example, by using Discrete Fourier Transform (DFT) or Discrete Cosine Transform (DCT). The correction is done by multiplying the transformed sample values by adjustable complex numbers.

Adaptive filters using Least Mean Square (LMS) algorithms in the time and frequency domain for channel equalizers have been presented, for example, in the article Narayan, Peterson, Narasimha: "Transform Domain LMS Algorithm" in the publication IEEE Transactions on Acoustics, Speech and Signal Processing, Vol. Assp-31, No 3, June 1983. The problem with these LMS algorithms is generally, however, that when one tries to obtain a small residual mean squared error, the method has a slow convergence rate and then it is not able to follow the fast changes in the properties of the transfer channel.

Receivers which use Orthogonal Frequency Division Multiplexing (OFDM) and in which transformation is always carried out into the frequency domain, also have a known method where the sample values of the frequency domain are multiplied by the corresponding inverse values of the frequency response of the estimated channel and the estimated channel is adjusted to correspond to the actual channel. The estimate formed of a single sample value and a corresponding actual symbol value is, however, rather unreliable, which lessens the reliability of the channel equalization. It is awkward to form a good estimate, especially when channel noise is strong.

The aim of this invention is to provide such a method and an arrangement for frequency domain channel equalization of digital signals which can be used for solving the problems presented previously. Thus the aim is a channel equalizer which does not have the disadvantages of the prior known equalizers using the method of the Least Mean Squared Error (LMSE) and the calculation algorithm of its factors having a significantly faster convergence than in corresponding equalizers using the LMSE method.

A method according to the invention is characterized in the claim 1. A channel equalizer according to the invention is characterized in the claim 8.

In an equalization method according to the invention, estimates used as correction factors are formed for the inverse values of the frequency response of the channel in such a way that for each symbol sequence the estimate is formed as a weighted average of the estimate of the previous sequence and of a new numerical value which is obtained by dividing the actual symbol value by the received sample value.

A channel equalizer using this method contains a DFT transform block as a demultiplexing block, a multiplier, a quantization block, an updating block of factors and a training symbol block so that samples received from the demultiplexing block are corrected by factors $C$ in the multiplier, the corrected samples are quantized in the quantization block, samples quantized in the quantization block are used as the output of the equalizer and, in addition, in the decision feedback state of the equalizer for updating factors in the updating block of the factors, the factors of the equalizer are initialized with the help of the training symbol block by using a prior known training symbol and a weighted average of the correction factors of the previous instant of time and the present instant of time is used for updating the factors.

The invention will be described in detail in the following by referring to the attached figures of which:

   fig. 1 shows the basic principle of the MCM method at the transmitting end,
   fig. 2 shows the connection of an LMS equalizer of a known time domain,
   fig. 3 shows a transfer chain of an OFDM system,
   fig. 4 shows a channel equalizer according to the invention,
   fig. 5 shows a filter connection for updating correction factors.

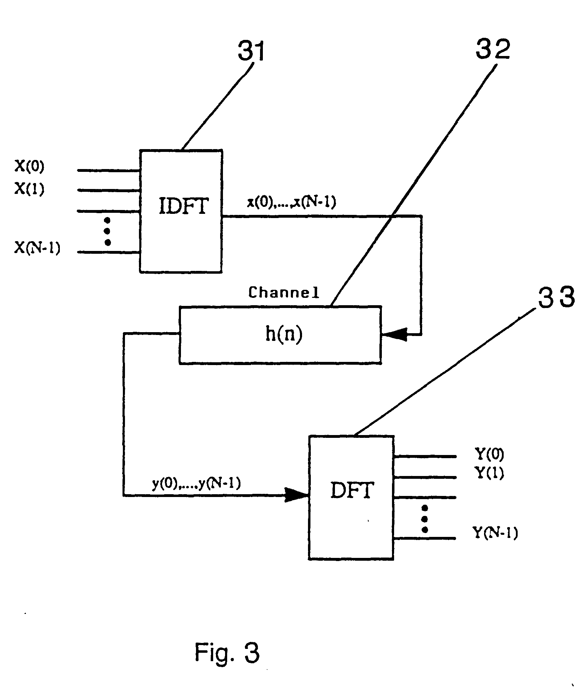

The invention will be described in an embodiment in which a channel equalizer is being used in a receiver of an OFDM system known per se. Fig. 1 shows the general principle of a system using Multicarrier Modulation (MCM) in a receiver. Fig. 3 shows the entire transfer chain of the system and, in addition, it has been assumed that the modulator 2 in Fig. 1 uses modulation in which a time domain signal is modulated into a frequency domain signal. For simplicity, the name Orthogonally Frequency-Division Multiplexing (OFDM) will be used for this system later on in the text. The transfer chain in Fig. 3 thus contains a multiplexing block 31 which corresponds to modulators 2 and a summer 3 of Fig. 1, a transfer channel 32 and a demultiplexing block 33. At the transmitting end, a data stream which is in parallel form and which is described by symbols X(0), X(1), .., X(N-1) is multiplexed in a multiplexing block 31 to sub-carriers by using, for example, Inverse Discrete Fourier Transformation (IDFT). A multiplexed signal is transmitted further to a transfer channel 32. In a demultiplexing block 33 of the receiver, the samples of the sub-channels are demultiplexed back to a parallel form Y(0), Y(1), .., Y(N-1) by using Discrete Fourier Transformation (DFT).

If the transfer function *h(n)* of the transfer channel 32 is linear; the above described process can be presented as follows,

$$y(n) = x(n)*h(n) + d(n) .$$

In this, d(n) is sum of total noise in a channel. As referred to in the prior art description of the specification, the protection time related to the OFDM symbol is chosen to be sufficiently long, that is longer than the delay dispersion of the channel. Then the sampled data *Y(k)* can be presented as follows,

$$Y(k) = X(k)H(k) + D(k)$$

where *H(k)* is the discrete Fourier transform (DFT) of the response of the channel and *D(k)* is the discrete Fourier transform (DFT) of the noise. As can be seen, the received samples are, depending on the channel, more or less distorted, that *means Y(k) ≠ X(k)* .

By using, according to the invention, correction factors *C(k)* for each subcarrier, effects of the distortion can be reduced. Then the sampled data X*(k)* corrected at the receiver equals

$$\overset{\wedge}{X}(k) = C(k)Y(k) = C(k)X(k)H(k) - C(k)D(k).$$

By requiring now that *C(k)H(k)* =1, the above presented formula can be converted to the form

$$\overset{\wedge}{X}(k)= X(k)+ \frac{D(k)}{H(k)}.$$

If the time average of the noise of the channel equals zero, that is *<D(k)>* = 0, the time average of the corrected sampled data equals

$$\left\langle \hat{X}(k)\right\rangle = \left\langle X(k)+ \frac{D(k)}{H(k)}\right\rangle = \left\langle X(k)\right\rangle$$

It can be noticed that equalization according to the method produces the desired result on the average.

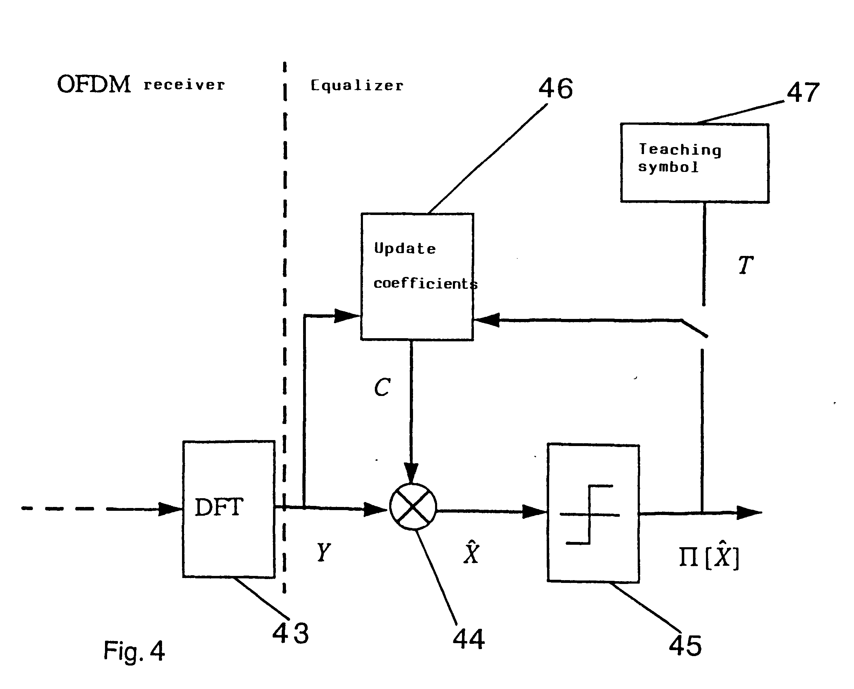

Fig. 4 shows a channel equalizer according to the invention for the channel equalization of digital signals in the frequency domain. The equalizer contains a DFT transform block 43 as a demultiplexing block, a multiplier 44, a quantization block 45, an updating block 46 of factors and a training symbol block 47. In this, all the sampled data have been presented in a vector form, that is information related to all N subcarriers flows in a parallel form from the DFT transformer. Samples received from the DFT transform block 43 are corrected by factors C in the multiplier 44, after which the corrected samples are quantized in the quantization block 45, its output being the output of the equalizer. Samples quantized in the quantization block 45 are also being used in the decision feedback state of the equalizer for updating factors in the updating block 46 of factors. The factors of the equalizer are initialized with the help of the training symbol block 47 by using a prior known training symbol.

In contrast to the use of the conventional least mean square (LMS), the use of weighted average of the correction factors of the previous instant of time and the present instant of time provides the updating of the factors. Then correction factors are obtained as follows:

$$C(j+1,k) = C(j,k) + \left\{ \frac{\Pi\left[\hat{X}(j,k)\right]}{Y(j,k)} - C(j,k) \right\} \Delta$$

$$= (1-\Delta)C(j,k) + \Delta \frac{\Pi\left[\hat{X}(j,k)\right]}{Y(j,k)}$$

In this, $j$ refers to the instant of time and $k$ to the ordinal number of the subcarrier. $X(k)$ is the transmitted symbol and $Y(k)$ is the received and uncorrected sample. $\Delta$ is a suitably chosen weighting coefficient. $\Pi[\ ]$ is a decision-making function which rounds off its argument in the Euclidean meaning to the nearest constellation point as follows:

$$\Pi[x] = \{s_i : \min|x - s_i|\}$$

when $S = \{S_0, S_1,..., S_{N-1}\}$ is a set of constellation points.

In a situation where $|Y(j,k)|$ is near zero or zero, the singularity of the latter term in the above presented sum clause $C(j+l,k)$ causes a problematic situation. The situation can be prevented by requiring that the factors of the equalizer are not updated when $|Y(j,k)|$ is smaller than any suitable previously chosen threshold value at which $C(j+l, k)=C(j,k)$.

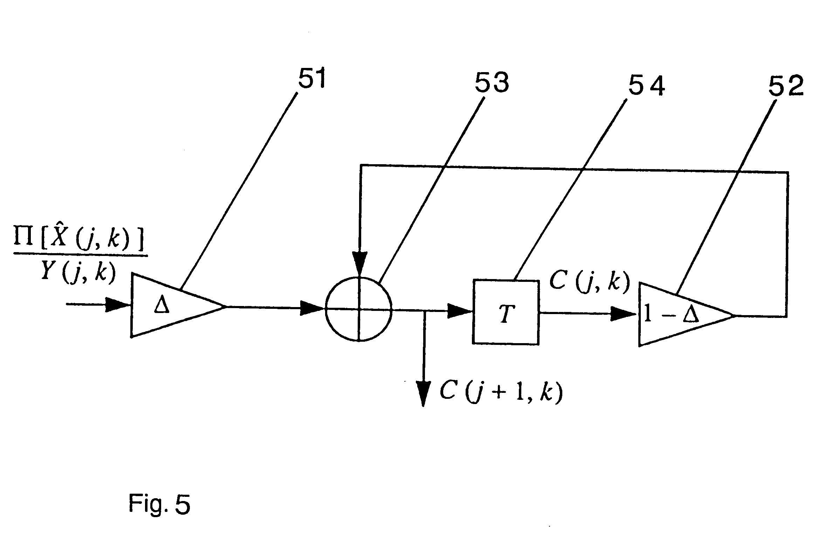

Fig. 5 shows a filter structure according to the invention for updating the correction factors of the channel equalizer. It contains factor blocks 51, 52, a summer 53 and a delay block 54. At first, $X(k)$ is obtained by using a known training symbol $T(k)$ which is obtained from a training symbol block 47 in Fig. 4 and later on it is obtained from a decision made in a decision feedback state. The factors of the equalizer can be initialized by using a known training symbol. In the initialization, it is chosen that $\Delta=1$, in which case information about the previous factors is not needed at all. The initial values for the factors are obtained from the formula of correction factors $C(j+l,k)$ by setting $\Delta=1$ and

$$\Pi\left[X\left(\hat{0},k\right)\right] = T(k)$$

as follows:

$$C(0,k) = \frac{T(k)}{Y(0,k)}.$$

A sample value $\Pi\llcorner X(j,k)$ corresponding to the symbol $X(j,k)$ is obtained as an output of the equalizer.

According to one embodiment, also a variable factor value can be used instead of a fixed factor $\Delta$. For example, when a strong signal is received, that is when $|Y(k)|$ is great, the value of $\Delta$ can be raised respectively. The idea is based on the fact that a strong signal gives a more reliable estimate of the channel. Then the factor could be formed as $\Delta(|Y(k)|)$. However, this does increase somewhat the need for computation.

The method presented herein can be applied especially in systems using Orthogonal Frequency Division Multiplexing (OFDM), for example, in transfer of radio and TV signals. The algorithm of the equalizer has a significantly faster convergence than respective algorithms of equalizers which are based on the method of the Least Mean Square and in these algorithms the residual mean squared error is equally small. The method is also adaptive, which means that it is able to follow slow changes occurring in the properties of the transfer channel.

**Claims**

1. A method for the channel equalization of a digital multicarrier signal in the frequency domain when receiving a modulated multicarrier signal transmitted from a transfer channel and which is transformed by symbol sequences into several parallel sub-channels including uncorrected samples, after which each uncorrected sample is corrected by multiplying it by a correction factor which is updated by symbol sequences, **characterized** in that for each sub-channel the correction factor is formed as a weighted average of the correction factor of the same sub-channel corresponding to the previous instant of time and of a numerical value which is obtained by dividing the quantized, corrected sample of the same sub-channel by the received, uncorrected sample of the same sub-channel.

2.  A method according to claim 1, **characterized** in that the actual symbol value is obtained from the corrected sample value received from the output of the equalizer for the previous instant of time.

3.  A method according to claims 1 and 2, **characterized** in that correction factors (C) are obtained as follows:

$$C(j+1,k) = C(j,k) + \left\{ \frac{\Pi\left[\hat{X}(j,k)\right]}{Y(j,k)} - C(j,k) \right\} \Delta$$

$$= (1-\Delta)C(j,k) + \Delta \frac{\Pi\left[\hat{X}(j,k)\right]}{Y(j,k)}$$

in which

$j$ refers to the instant of time,
$k$ is the ordinal number of the sub-channel,
$X(k)$ is the transmitted symbol, $X(k)$ is the corrected sample and $Y(k)$ is the uncorrected sample,
$\Delta$ is the weighting coefficient, and
$\Pi$ [ ] is a decision-making function which rounds off its argument in the Euclidean meaning to the nearest constellation point as follows:

$$\Pi [x] = \{s_i : \min|x - s_i|\}$$

at which S= $S_0$, $S_1$,..., $S_{N-1}$ is a set of constellation points.

4.  A method according to claim 3, **characterized** in that the initial values $C(0,k)$ of correction factors are obtained by setting $\Delta$ =1 and $\Pi$ [$X(0,k)$] = $T(k)$, where T(k) is a known training symbol.

5.  A method according to claim 3, **characterized** in that the weighting coefficient is variable in which case if the value |$Y(k)$| of the signal to be received is great, the value of the weighting coefficient is correspondingly raised.

6.  A method according to claims 1 or 3, **characterized** in that if an uncorrected sample value for any symbol sequence equals zero or is near the value zero, correction factors are not updated at all for this sequence.

7.  Use of a method according to any of the previous claims in receivers using Orthogonal Frequency Division Multiplexing.

8.  A channel equalizer for the channel equalization of a digital multicarrier signal in the frequency domain containing a demultiplexing block (43) for transforming a multicarrier signal sequentially into several parallel, uncorrected samples (Y(0), Y(1),...Y(n)), a multiplier (44) where each uncorrected sample is multiplied by a correction factor (C), a quantization block (45) for quantizing a sample ($X$) received from the output of the multiplier and an updating block (46) of correction factors, **characterized** in that the first input of the updating block (46) of correction factors is functionally connected to the output of the equalizer at which the mentioned input is influenced by a corrected sample ($\Pi$ ($X$)) formed for the previous instant of time, and the second input of the updating block is connected to the output of the demultiplexing block (43) at which the mentioned second input is influenced by the uncorrected sample (Y) of present instant of time, the updating block (46) of correction factors containing means for calculating the correction factor for each symbol sequence as a weighted average of the correction factor for the previous instant of time and of a new numerical value which is obtained by dividing the quantized corrected value ($\Pi$ ($X$)) of the same sub-channel which influences the first input by an uncorrected sample value (Y) of the same sub-channel, which influences the second input.

9. A channel equalizer according to claim 8, **characterized** in that the factors are initialized by connecting the first input to the training symbol block (47) from which a known training symbol (T) is obtained.

10. A channel equalizer according to claim 8, **characterized** in that the mentioned means contain calculation means for calculating correction factors (C) as follows:

$$C(j+1,k) = C(j,k) + \left\{ \frac{\Pi\left[\hat{X}(j,k)\right]}{Y(j,k)} - C(j,k) \right\} \Delta$$

$$= (1-\Delta)C(j,k) + \Delta \frac{\Pi\left[\hat{X}(j,k)\right]}{Y(j,k)}$$

where

$j$ refers to the instant of time,
$k$ is the ordinal number of the sub-channel,
$X(k)$ is the transmitted symbol, $\hat{X}(k)$ is the corrected sample and $Y(k)$ is the uncorrected sample,
$\Delta$ is a weighting coefficient, and
$\Pi[\ ]$ is a decision-making function which rounds off its argument in the Euclidean meaning to the nearest constellation point as follows:

$$\Pi[x] = \{ s_i : \min |x - s_i| \}$$

at which $S = S_0, S_1, ..., S_{N-1}$ is a set of constellation points.

11. A channel equalizer according to claim 10, **characterized** in that the calculation means contain a first weighting means (51) which weights the quotient of the first input and the second input of the updating block (46) of the correction factor by a weighting coefficient $\Delta$ and the output of which has been connected to the first input of the summer (53), a second weighting means (52) which weights by a weighting coefficient 1-$\Delta$ an output signal C(j,k) of a summer (53) which has been transmitted to it and which has been delayed for one symbol sequence in a delay element (54) and the output of this second weighting means (52) has been connected to the second input of the summer (53) at which the output signal of the summer (53) is the correction factor C(j+1,k).

**Patentansprüche**

1. Verfahren zur Kanalentzerrung eines digitalen Mehrträgersignals in der Frequenzdomäne beim Empfangen eines modulierten Mehrträgersignals, das von einem Transferkanal übertragen wurde und das nach Symbolfolgen in mehrere parallele Subkanäle einschließlich unkorrigierter Abtastwerte transformiert wird, wonach jeder unkorrigierte Abtastwert durch Multiplikation desselben mit einem Korrekturfaktor korrigiert wird, der durch Symbolfolgen aktualisiert wird, dadurch gekennzeichnet, dass für jeden Subkanal der Korrekturfaktor als gewichtetes Mittel aus dem Korrekturfaktor desselben Subkanals, der dem vorherigen Zeitpunkt entspricht, und einem numerischen Wert gebildet wird, der durch Dividieren des quantifizierten, korrigierten Abtastwertes desselben Subkanals durch den empfangenen unkorrigierten Abtastwert desselben Subkanals erhalten wird.

2. Verfahren nach Anspruch 1, dadurch gekennzeichnet, dass der eigentliche Symbolwert von dem korrigierten Abtastwert erhalten wird, der vom Ausgang des Entzerrers für den vorherigen Zeitpunkt empfangen wurde.

3. Verfahren nach Anspruch 1 und 2, dadurch gekennzeichnet, dass Korrekturfaktoren (C) wie folgt erhalten werden:

$$C(j+1,k) = C(j,k) + \left\{ \frac{\Pi\left[\hat{X}(j,k)\right]}{Y(j,k)} - C(j,k) \right\} \Delta$$

$$= (1-\Delta)C(j,k) + \Delta \frac{\Pi\left[\hat{X}(j,k)\right]}{Y(j,k)}$$

wobei

$j$ den Zeitpunkt bedeutet,
$k$ die Ordinalzahl des Subkanals ist,
$X(k)$ das übertragene Symbol, $X(k)$ den korrigierten Abtastwert und $Y(k)$ der unkorrigierte Abtastwert ist,
$\Delta$ der gewichtete Koeffizient und
$\Pi\,[\,]$ eine Entscheidungsfunktion ist, die ihren Parameter wie folgt in der euklidischen Bedeutung zum nächsten Konstellationspunkt abrundet:

$$\Pi\,[x] = \{s_i : \min|x - s_i|\}$$

wobei S = S0, S1, ..., SN-1 ein Satz von Konstellationspunkten ist.

4. Verfahren nach Anspruch 3, dadurch gekennzeichnet, dass die Anfangswerte $C(0,k)$ von Korrekturfaktoren durch Einstellen von $\Delta=1$ und $\Pi\,[X\,(0,\,k)] = T(k)$ erhalten werden, wobei T(k) ein bekanntes Trainingssymbol ist.

5. Verfahren nach Anspruch 3, dadurch gekennzeichnet, dass der Gewichtungskoeffizient variabel ist, und in diesem Fall ist, wenn der Wert $|Y(k)|$ des zu empfangenden Signals groß ist, der Wert des Gewichtungskoeffizienten entsprechend erhöht.

6. Verfahren nach Anspruch 1 oder 3, dadurch gekennzeichnet, dass, wenn ein unkorrigierter Abtastwert für eine Symbolfolge gleich oder nahe Null ist, Korrekturfaktoren für diese Folge überhaupt nicht aktualisiert werden.

7. Anwendung eines Verfahrens nach einem der vorherigen Ansprüche in Empfängern, die mit dem orthogonalen Frequenzmultiplexverfahren arbeiten.

8. Kanalentzerrer zur Kanalentzerrung eines digitalen Mehrträgersignals in der Frequenzdomäne, umfassend einen Demultiplexierblock (43) zum sequenziellen Umformen eines Mehrträgersignals in mehrere parallele, unkorrigierte Abtastwerte (Y(0), Y(1), ... Y(n)), einen Vervielfacher (44), wobei jeder unkorrigierte Abtastwert mit einem Korrekturfaktor (C) multipliziert wird, einen Quantisierblock (45) zum Quantisieren eines Abtastwertes ($X$), der vom Ausgang des Vervielfachers erhalten wurde, und einen Aktualisierungsblock (46) von Korrekturfaktoren, dadurch gekennzeichnet, dass der erste Eingang des Aktualisierungsblockes (46) von Korrekturfaktoren funktionell mit dem Ausgang des Entzerrers verbunden ist, bei dem der erwähnte Eingang durch einen korrigierten Abtastwert ($\Pi(X)$) beeinflusst wird, der für den vorherigen Zeitpunkt gebildet wird, und der zweite Eingang des Aktualisierungsblockes mit dem Ausgang des Demultiplexierblockes (43) verbunden ist, an dem der erwähnte zweite Eingang durch den unkorrigierten Abtastwert (Y) des aktuellen Zeitpunktes beeinflusst wird, wobei der Aktualisierungsblock (46) von Korrekturfaktoren ein Mittel zum Berechnen des Korrekturfaktors für jede Symbolfolge als gewichtetes Mittel aus dem Korrekturfaktor für den vorherigen Zeitpunkt und einem numerischen Wert enthält, der durch Dividieren des quantisierten korrigierten Wertes ($\Pi\,(X)$) desselben Subkanals erhalten wird, der den ersten Eingang durch einen unkorrigierten Abtastwert (Y) desselben Subkanals beeinflusst, der den zweiten Eingang beeinflusst.

9. Kanalentzerrer nach Anspruch 8, dadurch gekennzeichnet, dass die Faktoren dadurch initialisiert werden, dass der erste Eingang mit dem Trainingssymbolblock (47) verbunden wird, von dem ein bekanntes Trainingssymbol (T) erhalten wird.

10. Kanalentzerrer nach Anspruch 8, dadurch gekennzeichnet, dass die genannten Mittel Berechnungsmittel beinhalten, um Korrekturfaktoren (C) wie folgt zu berechnen:

$$C(j+1,k) = C(j,k) + \left\{ \frac{\Pi\left[\hat{X}(j,k)\right]}{Y(j,k)} - C(j,k) \right\} \Delta$$

$$= (1 - \Delta)C(j,k) + \Delta \frac{\Pi\left[\hat{X}(j,k)\right]}{Y(j,k)}$$

wobei

$j$ den Zeitpunkt bedeutet,
$k$ die Ordinalzahl des Subkanals ist,
$X(k)$ das übertragene Symbol, $X(k)$ der korrigierte Abtastwert und Y(k) der unkorrigierte Abtastwert ist,
$\Delta$ der gewichtete Koeffizient und
$\Pi[\ ]$ eine Entscheidungsfunktion ist, die ihren Parameter wie folgt in der euklidischen Bedeutung zum nächsten Konstellationspunkt abrundet:

$$\Pi\,[x] = \{s_i : \min|x - s_i|\}$$

wobei S = S0, S1, ..., SN-1 ein Satz von Konstellationspunkten ist.

**11.** Kanalentzerrer nach Anspruch 10, dadurch gekennzeichnet, dass die Berechnungsmittel folgendes umfassen: ein erstes Gewichtungsmittel (51), das den Quotienten des ersten Eingangs und des zweiten Eingangs des Aktualisierungsblockes (46) des Korrekturfaktors mit einem Gewichtungskoeffizienten $\Delta$ gewichtet, und dessen Ausgang mit dem ersten Eingang des Summierers (53) verbunden wurde, ein zweites Gewichtungsmittel (52), das mit einem Gewichtungskoeffizient 1-$\Delta$ ein Ausgangssignal C(j,k) eines Summierers (53) gewichtet, das zu diesem übertragen wurde und das für eine Symbolfolge in einem Verzögerungselement (54) verzögert wurde, und der Ausgang dieses zweiten Gewichtungsmittels (52) mit dem zweiten Eingang des Summierers (53) verbunden wurde, an dem das Ausgangssignal des Summierers (53) der Korrekturfaktor C(j+1,k) ist.

**Revendications**

**1.** Procédé d'égalisation de voies d'un signal à porteuses multiples numérique dans le domaine fréquentiel lors de la réception d'un signal à porteuses multiples modulé transmis depuis une voie de transfert et qui est transformé par des suites de symboles en plusieurs sous-voies parallèles incluant des échantillons non corrigés, après quoi chaque échantillon non corrigé est corrigé en le multipliant par un facteur de correction qui est actualisé par des suites de symboles, caractérisé en ce que pour chaque sous-voie le facteur de correction est constitué en tant que moyenne pondérée du facteur de correction de la même sous-voie correspondant à l'instant temporel précédent et d'une valeur numérique qui est obtenue en divisant l'échantillon corrigé quantifié de la même sous-voie par l'échantillon non corrigé reçu de la même sous-voie.

**2.** Procédé selon la revendication 1, caractérisé en ce que la valeur réelle de symbole est obtenue à partir de la valeur de l'échantillon corrigé reçue à partir de la sortie de l'égaliseur pour l'instant temporel précédent.

**3.** Procédé selon la revendication 1 et 2, caractérisé en ce que les facteurs de correction (c) sont obtenus de la façon suivante :

$$C(j + 1, k) = C(j, k) + \left\{ \frac{\Pi\left[\hat{X}(j, k)\right]}{Y(j, k)} - C(j, k) \right\} \Delta$$

$$= (1 - \Delta)C(j, k) + \Delta \frac{\Pi\left[\hat{X}(j, k)\right]}{Y(j, k)}$$

où

$j$ se rapporte à l'instant temporel,
$k$ est le nombre ordinal de la sous-voie,
$X(k)$ est le symbole transmis, $X(k)$ est l'échantillon corrigé et $Y(k)$ est l'échantillon non corrigé,
$\Delta$ est le coefficient de pondération, et
$\Pi$ [ ] est une fonction de prise de décision qui arrondit au plus près son argument, au sens euclidien du terme, au point le plus proche de la constellation, de la façon suivante :

$$\Pi \ [x] = \{s_i : \min|x - s_i|\}$$

auquel S$= S_0, S_1, ..., S_{N-1}$ est un ensemble de points de constellation.

4. Procédé selon la revendication 3, caractérisé en ce que les valeurs initiales $C(0,k)$ des facteurs de correction sont obtenues en faisant $\Delta$=1 et $\Pi[X(0,k)] = T(k)$, T(k) étant un symbole d'apprentissage connu.

5. Procédé selon la revendication 3, caractérisé en ce que le coefficient de pondération est variable, auquel cas, si la valeur $|Y(k)|$ du signal devant être reçu est élevée, la valeur du coefficient de pondération est augmentée de façon correspondante.

6. Procédé selon la revendication 1 ou 3, caractérisé en ce que, si une valeur d'échantillon non corrigé pour une quelconque suite de symboles est égale à zéro ou bien est proche de la valeur zéro, les facteurs de correction ne sont pas du tout actualisés pour cette séquence.

7. Utilisation d'un procédé selon l'une quelconque des revendications précédentes dans des récepteurs faisant usage d'un multiplexage par répartition en fréquence d'ondes orthogonales.

8. Egaliseur de voies pour l'égalisation de voies d'un signal à porteuses multiples numérique dans le domaine fréquentiel, contenant un bloc de démultiplexage (43) pour transformer séquentiellement un signal à porteuses multiples en plusieurs échantillons non corrigés parallèles (Y(0), Y(1), ...Y(N)), un multiplicateur (44) dans lequel chaque échantillon non corrigé est multiplié par un facteur de correction (C), un bloc de quantification (45) pour quantifier un échantillon ($X$) reçu à partir de la sortie du multiplicateur et un bloc d'actualisation (46) des facteurs de correction, caractérisé en ce la première entrée du bloc d'actualisation (46) des facteurs de correction est connectée, -en fonctionnement, à la sortie de l'égaliseur auquel l'entrée mentionnée est influencée par un échantillon corrigé ($\Pi(X)$) constitué pour l'instant temporel précédent, et la seconde entrée du bloc d'actualisation est connectée à la sortie du bloc de démultiplexage (43) auquel la seconde entrée mentionnée est influencée par l'échantillon non corrigé (Y) du présent instant temporel, le bloc d'actualisation (46) des facteurs de correction contenant des moyens pour calculer le facteur de correction pour chaque suite de symboles en tant que moyenne pondérée du facteur de correction pour l'instant temporel précédent et d'une nouvelle valeur numérique qui est obtenue en divisant la valeur corrigée quantifiée ($\Pi(X)$ de la même sous-voie qui influence la première entrée par une valeur d'échantillon non corrigé (Y) de la même sous-voie, qui influence la seconde entrée.

9. Egaliseur de voies selon la revendication 8, caractérisé en ce que les facteurs sont initialisés en connectant la première entrée au bloc de symboles d'apprentissage (47) à partir duquel un symbole d'apprentissage connu (T) est obtenu.

**10.** Egaliseur de voies selon la revendication 8, caractérisé en ce que les moyens mentionnés contiennent des moyens de calcul pour calculer les facteurs de correction (C), de la façon suivante :

$$C(j + 1, k) = C(j, k) + \left\{ \frac{\Pi[\hat{X}(j, k)]}{Y(j, k)} - C(j, k) \right\} \Delta$$

$$= (1 - \Delta)C(j, k) + \Delta \frac{\Pi[\hat{X}(j, k)]}{Y(j, k)}$$

où

$j$ se rapporte à l'instant temporel,
$k$ est le nombre ordinal de la sous-voie,
$X(k)$ est le symbole transmis, $X(k)$ est l'échantillon corrigé et $Y(k)$ est l'échantillon non corrigé,
$\Delta$ est un coefficient de pondération, et
$\Pi[\ ]$ est une fonction de prise de décision qui arrondit au plus près son argument, au sens euclidien du terme, au point le plus proche de la constellation, de la façon suivante :

$$\Pi[x] = \{s_i : \min |x - s_i|\}$$

auquel $S = S_0, S_1, ..., S_{N-1}$ est un ensemble de points de constellation.

**11.** Egaliseur de voies selon la revendication 10, caractérisé en ce que les moyens de calcul contiennent des premiers moyens de pondération (51) qui pondèrent le quotient de la première entrée et la seconde entrée du bloc d'actualisation (46) du facteur de correction par un coefficient de pondération $\Delta$ et dont la sortie a été connectée à la première entrée du sommateur (53), des seconds moyens de pondération (52) qui pondèrent par un coefficient de pondération 1-$\Delta$ un signal de sortie C(j,k) d'un sommateur (53) qui lui a été transmis et qui a été retardé d'une suite de symboles dans un élément à retard (54) et la sortie de ces seconds moyens de pondération (52) a été connectée à la seconde entrée du sommateur (53) auquel le signal de sortie du sommateur (53) est le facteur de correction C(j+1,k).

**Fig. 1**

**Fig. 2**

Fig. 3

OFDM receiver | Equalizer

Teaching symbol — 47

Update coefficients — 46

$T$

$C$

DFT — 43

$Y$

$\otimes$ — 44

$\hat{X}$

$\boxed{\int}$ — 45

$\Pi[\hat{X}]$

Fig. 4

EP 0 700 189 B1

Fig. 5